Europäisches Patentamt

European Patent Office

Office européen des brevets

(11) Veröffentlichungsnummer: **0 106 205**
**A1**

(12) **EUROPÄISCHE PATENTANMELDUNG**

(21) Anmeldenummer: 83109383.6

(22) Anmeldetag: 21.09.83

(51) Int. Cl.³: **G 01 S 15/10**

(30) Priorität: 23.09.82 DE 3235198

(43) Veröffentlichungstag der Anmeldung:
25.04.84 Patentblatt 84/17

(84) Benannte Vertragsstaaten:
BE DE FR GB IT NL

(71) Anmelder: Honeywell-Elac-Nautik GmbH
Westring 425-429
D-2300 Kiel(DE)

(72) Erfinder: Thieme, Siegfried
Königsberger Strasse 12
D-2308 Preetz(DE)

(74) Vertreter: Rentzsch, Heinz et al,
Honeywell Europe S.A. Holding KG Patent- und
Lizenzabteilung Kaiserleistrasse 55
D-6050 Offenbach am Main(DE)

(54) Echoloteinrichtung mit Wellenhöhenausgleich.

(57) Zum Wellenhöhenausgleich bei Tiefenmessungen mit einem Echolotgerät ist am Schiff oder sonstigen Schwimmkörper ein barometrischer Differenzdruckmesser (1) angebracht, dessen Ausgangssignal verstärkt (7) und dem vom Echolotgerät gelieferten Tiefensignal derart aufgeschaltet wird, daß durch Vertikalbewegungen des Schiffes im Wellengang bedingte Entfernungsschwankungen kompensiert und nicht zur Anzeige gebracht werden.

EP 0 106 205 A1

Croydon Printing Company Ltd.

Honeywell-Elac-Nautik GmbH

Westring 425 - 429

2300 Kiel 1

20. September 1983

74100479 EP

HR/ep

Echoloteinrichtung mit
Wellenhöhenausgleich

Für hydrographische Vermessungen mittels Echolot ist vielfach ein Ausgleich der durch den Wellengang bedingten Vertikalbewegungen des Schiffes oder sonstigen Schwimmkörpers erforderlich. Es ist bekannt, hierfür einen auf Vertikalbeschleunigungen ansprechenden Geber, z.B. einen Kreisel, vorzusehen und aus dessen elektrischem Ausgangssignal durch zweimalige Integration ein Wegsignal bzw. Schiffslageänderungssignal abzuleiten. Dieses wird dem die Zeitbasis der Aufzeichnung bestimmenden Signal in einem den Wellengang kompensierenden Sinne aufgeschaltet. Die hierfür erforderlichen Geber (z.B. Kreisel, Pendel) und Integratoren sind aufwendig. Aufgabe der Erfindung ist es, eine demgegenüber möglichst einfache, preisgünstige und zugleich zuverlässige Einrichtung zu schaffen. Sie soll ohne größere Umbauten in Verbindung mit Echolotgeräten einsetzbar sein, deren Anzeige- und Schreibvorrichtungen eine veränderbare Zeitbasis, z.B. Taktfrequenz, haben. Diese Aufgabe wird gelöst durch die im Anspruch 1 gekennzeichnete Erfindung. Sie eignet sich besonders für Echolotgeräte mit Zwischenspeicherung der Empfangssignale, die dann mit unterschiedlicher Taktfrequenz aus dem Zwischenspeicher gelesen und zur Anzeige gebracht werden können. Vorteilhafte Ausgestaltungen ergeben sich aus den Unteransprüchen.

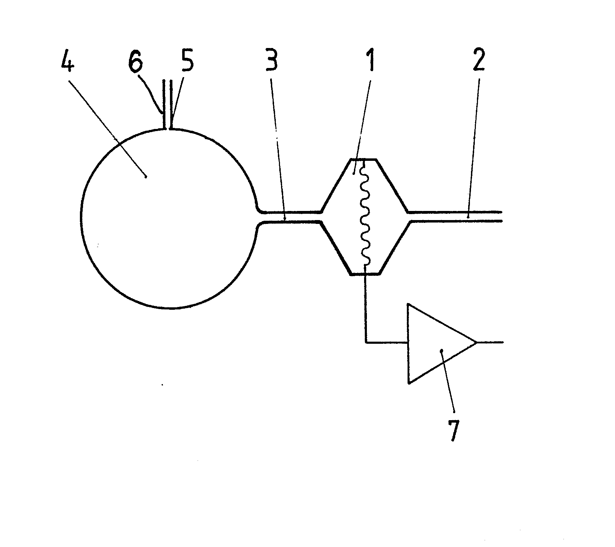

Die Erfindung wird nachfolgend anhand eines in der Zeichnung schematisch wiedergegebenen Ausführungsbei-

- 2 -

0106205

spiels erläutert.

Ein Differenzdruckmesser 1 steht einerseits über ein Rohr 2 mit der Außenluft in Verbindung, während seine andere Kammer über ein Rohr 3 an einen Luftbehälter 4 angeschlossen ist. Im Luftbehälter 4 ist eine kleine als Strömungswiderstand wirksame Öffnung 5 vorgesehen, welche den Innenraum des Luftbehälters 4 über ein Rohr 6 mit der Außenluft verbindet. Als Strömungswiderstand kann auch oder zusätzlich ein Kapillarrohr 6 dienen. Der Differenzdruckmesser 1 kann beispielsweise als Membrandose oder piezoelektrischer Druckaufnehmer ausgebildet sein. Sein Ausgangssignal gelangt zu einem Gleichstromverstärker 7 und wird von dessen Ausgang dem Lotschreiber zugeführt. Dort wird durch dieses Signal die für eine Echolotung erforderliche Zeitbasis derart beeinflußt, z.B. die Frequenz eines Taktgebers gesteuert, daß die durch Vertikalbewegungen des Schiffes oder Schwimmkörpers bedingten Entfernungsschwankungen kompensiert werden. Aufgabe des Luftbehälters 4 ist es, den Einfluß wetterbedingter Luftdruckschwankungen auf das Meßsignal auszugleichen. Deshalb steht der Innenraum des Luftbehälters 4 über eine sehr kleine Öffnung 5 und/oder ein Kapillarrohr 6 ebenfalls mit der Außenluft in Verbindung. Der Strömungswiderstand gebildet durch die Öffnung 5 und das Kapillarrohr 6 zusammen mit dem Volumen des Luftbehälters 4 stellen ein integrierendes pneumatisches Zeitglied dar, dessen Zeitkonstante groß gewählt ist gegenüber der Periodendauer der Wellen. Damit wird der über das Rohr 2 auf den Differenzdruckmesser 1 einwirkende barometrische Luftdruck mit einem im Behälter 4 herrschenden Luftdruckmittelwert verglichen, der von wellenbedingten Schwankungen frei ist. Der gemessene Differenzdruck sinkt, sobald das Schiff von einer Welle angehoben wird, und steigt während der Abwärtsbewegung des Schiffes. Der Druck im Luftbehälter 4 bleibt dabei konstant. Damit ergeben sich Druckänderungen von etwa 0,15 mbar pro m Höhenänderung, die in bekannter Weise in ein elektrisches Signal umgewandelt werden, welches im Rhythmus der Wellenbewegung schwankt. Dieses wird im Verstärker 7 verstärkt und der Zeitbasis für das anzuzeigende oder aufzuzeichnende Signal des Echolotgerätes gegengeschaltet. Dies gilt sowohl für herkömmliche Echolotschreiber mit Schreibstreifen und umlaufender Schreibnadel als auch für Bildschirmanzeigegeräte. Im Falle einer Analoganzeige der Gewässertiefe kann das Wellenhöhensignal dem Anzeigesignal aufgeschaltet werden. Bei digitaler Anzeige oder Aufzeichnung werden beide Signale an geeigneter Stelle vor der Ableitung des Anzeigesignals zusammengeführt.

Im Prinzip besteht diese Aufschaltung des Wellenhöhensignals auf das Meßsignal darin, daß man die gemessene Tiefe um einen der Anhebung oder Absenkung des Schiffes gegenüber dem wellenfreien Gewässerspiegel entsprechenden Betrag erhöht bzw. vermindert. Hierzu kann die barometrisch gemessene Anhebung oder Absenkung auf elektrischem Wege in eine der doppelten, dem jeweiligen Hub entsprechende Laufzeit eines Schallsignals (hin und zurück) proportionale Korrekturzeit umgewandelt und diese Korrekturzeit zu der gemessenen Laufzeit hinzuaddiert bzw. von dieser abgezogen werden.

Wird die Lottiefe wie z.B. aus DE-C 19 32 346 bekannt auf einer Kathodenstrahlröhre angezeigt, so kann man den barometrischen Korrekturwert nach Umwandlung in ein elektrisches Signal der Ablenkspannung hinzuaddieren. Erfolgt die Tiefenanzeige digital, so werden dem Korrekturwert entsprechende Zahlenwerte in den die Anzeige steuernden Zähler eingegeben oder die Korrekturwerte verändern die Taktfrequenz des Zählers.

Bei Lotschreibern mit umlaufender Schreibnadel und einem Schreibstreifen aus stromempfindlichen Papier (vgl. z.B. DE-C 15 16 629) wird in Abhängigkeit von der jeweiligen Absenkung bzw. Anhebung des Schiffes im Wellengang die Aussendung des Lotimpulses um eine der doppelten Laufzeit über den jeweiligen Wellenhub entsprechende Zeitdauer verzögert bzw. früher ausgelöst. Auf diese Weise wird die durch den Wellenhub verursachte Laufzeitänderung kompensiert.

Patentansprüche:

1. Echoloteinrichtung mit Wellenhöhenausgleich, d a - d u r c h   g e k e n n z e i c h n e t , daß zur Messung von Vertikalbewegungen des Schiffes oder sonstigen Schwimmkörpers, an diesem ein barometrischer Druckmesser (1) angebracht und sein Ausgangssignal dem Lotanzeigegerät oder -Schreiber aufgeschaltet ist.

2. Echoloteinrichtung nach Anspruch 1, d a d u r c h   g e k e n n z e i c h n e t , daß der Druckmesser (1) als Differenzdruckmesser ausgebildet ist, dessen eine Kammer mit der Außenluft in Verbindung steht, während die zweite Kammer an einen Luftbehälter (4) angeschlossen ist, der über eine einen Strömungs- widerstand bildende kleine Öffnung (5) mit der Außen- luft in Verbindung steht.

3. Echoloteinrichtung nach Anspruch 2, d a d u r c h   g e k e n n z e i c h n e t , daß die durch das Volumen des Luftbehälters (4) und den Strömungswider- stand der Öffnung (5) bestimmte Zeitkonstante groß gewählt ist im Vergleich zur Periodendauer der Wellen.

4. Echoloteinrichtung nach Anspruch 2 oder 3, d a - d u r c h   g e k e n n z e i c h n e t , daß der Luftbehälter (4) über ein Kapillarrohr (6) mit der Außenluft in Verbindung steht.

# 0106205

## EUROPÄISCHER RECHERCHENBERICHT

Nummer der Anmeldung

EP 83 10 9383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-C- 599 667 (ASKANIA) <br> * Figur 1; Seite 3, Zeilen 9-24 * <br><br> --- | 1,2 | G 01 S 15/10 |
| Y | US-A-4 184 368 (R.A. FROSCH et al.) <br> * Figur 1; Zusammenfassung * <br><br> --- | 1 | |
| Y | US-A-3 301 047 (W.A. VON WALD et al.) <br> * Figur 2; Spalte 3, Zeilen 50-71 * <br><br> --- | 1 | |
| A | GB-A-1 307 310 (SMITHS INDUSTRIES) <br> * Figur 1; Seite 5, Zeilen 46-66 * <br><br> --- | | |
| A | US-A-3 017 606 (H. KIETZ et al.) <br> * Figur 2 * <br><br> --- | | |
| A | DE-A-2 040 313 (ANGLO AMERICAN CORP. OF SOUTH AFRICA) <br> * Figuren 1, 2 * <br><br> ----- | | |

**RECHERCHIERTE SACHGEBIETE (Int. Cl. 3)**

G 01 S 15/08
G 01 S 15/10
G 01 S 15/96

Der vorliegende Recherchenbericht wurde für alle Patentansprüche erstellt.

| Recherchenort <br> BERLIN | Abschlußdatum der Recherche <br> 15-12-1983 | Prüfer <br> BREUSING J |
|---|---|---|

EPA Form 1503 03.82